# EUROPÄISCHE PATENTSCHRIFT

(11) **EP 1 701 082 B1**
(45) Veröffentlichungstag und Bekanntmachung des Hinweises auf die Patenterteilung: **18.06.2008**
(21) Anmeldenummer: 06004443.5
(22) Anmeldetag: 06.03.2006
(51) Int. Cl.: F16L 47/06, F16L 37/088, F16L 37/084

(54) **Endabschnitt einer Fluidleitung mit angeformter Steckarmatur**
Conduit end portion with overmoulded plug arrangement
Portion d'extrémité de conduite à élément d'enfichage surmoulé

(30) Priorität: 10.03.2005 DE 102005010950
(43) Veröffentlichungstag der Anmeldung: 13.09.2006
(73) Patentinhaber: FTE automotive GmbH, 96106 Ebern (DE)
(72) Erfinder: Eggert, Uwe, 99986 Oberdorla (DE); Heim, Heiko, 99974 Mühlhausen (DE); Kollmann, Martin, 97496 Ibind (DE); Schneier, Jochen, 96199 Zapfendorf (DE)
(74) Vertreter: Oppermann, Mark

(56) Entgegenhaltungen:
- EP-A- 0 959 291
- EP-A- 1 065 427
- DE-A1- 19 543 318
- FR-A- 2 843 625
- US-A- 5 324 081
- US-A- 5 429 395

## Beschreibung

### TECHNISCHES GEBIET

Die Erfindung bezieht sich auf die Ausbildung eines Endabschnitts einer Fluidleitung mit einer angeformten Steckarmatur gemäß dem Oberbegriff des Patentanspruchs 1. Insbesondere bezieht sich die Erfindung auf einen Endabschnitt mit angeformter Steckarmatur für lösbare Steckverbindungen mit einem komplementär ausgebildeten Gegenelement, wie dem Stutzen eines Elements eines Hydrauliksystems oder mit einer anderen Fluidleitung. Derartige Steckverbindungen finden insbesondere in der Kraftfahrzeugtechnik bei hydraulischen Kupplungs- und Bremsanlagen in Massenfertigungsstückzahlen Anwendung.

### STAND DER TECHNIK

Bei einer bekannten Verbindung einer Fluidleitung aus Kunststoff mit einem rohrförmigen Kupplungselement aus Kunststoff (siehe die den Oberbegriff des Patentanspruchs 1 bildende DE-A-195 43 318), das als Steckkupplung ausgebildet sein kann, ist das Kupplungselement mit seinem in Fügerichtung inneren Endabschnitt koaxial um den Endabschnitt der Fluidleitung stoffschlüssig herumgespritzt. In Fügerichtung des Kupplungselements vor dem Endabschnitt der Fluidleitung sind zwei Dichtungsringe in Form von O-Ringen und ein dazwischenliegender Sicherungsring in einen zylindrischen Hohlraum des Kupplungselements eingesetzt. Diese Dichtungsanordnung ist dazu bestimmt gegenüber dem Außenumfang eines in den zylindrischen Hohlraum eingeschobenen komplementären Rohrabschnitts eines Gegenelements abzudichten. Allerdings ist bei dieser Anordnung die Verbindung zwischen der Fluidleitung und der Steckarmatur im Betrieb der Fluidleitung dem darin herrschenden hydraulischen Druck ausgesetzt. Darüber hinaus ist diese aus drei Teilen bestehende Ringanordnung in den im uneingebauten Zustand nach außen in Fügerichtung offenen und kein Widerlager für die Ringanordnung aufweisenden zylindrischen Hohlraum lose eingesetzt und ist daher nicht unverlierbar. Die Umspritzung des Endabschnitts der Fluidleitung mit dem Kupplungselement erfolgt auf dem zylindrischen Außenumfang der Fluidleitung, so daß die Haltbarkeit der Verbindung zwischen der Fluidleitung und dem Kupplungselement gegenüber axialen Zugkräften nur begrenzt ist.

Aus der EP-A-0 840 051 ist des weiteren eine Schlauchverbindung bekannt, bei der ein Ende eines aus Kunststoff bestehenden Schlauchs am Außenumfang mit einer Umfangsnut versehen ist, in der eine ringförmige Basis eines aus Kunststoff bestehenden Sicherungselements aufgenommen ist. Von der Basis des Sicherungselements erstrecken sich nach radial außen hakenartige Eingriffsabschnitte weg, die der Fixierung des Schlauchendes in einem rohrförmigen Paßelement aus Metall dienen, wobei die hakenartigen Eingriffsabschnitte einen nach radial außen umgebogenen Randabschnitt des Paßelements hintergreifen. Bei einer Druckbeaufschlagung dieser Schlauchverbindung kann es zu einer nicht unerheblichen Verformung der Eingriffsabschnitte kommen, einhergehend mit einer axialen Relativbewegung zwischen dem Schlauchende und dem Paßelement entgegen der Fügerichtung, was letztendlich zu unerwünschten Totvolumina in der Schlauchverbindung führt, d.h. einer Volumenaufnahme durch die Schlauchverbindung unter Druckbeaufschlagung.

Schließlich offenbart die US-A-5 324 081 einen Verbinder zum Verbinden von Rohren mit geringem Durchmesser. Der Verbinder hat einen im allgemeinen zylindrischen Hauptkörper mit einem eine axiale Bohrung aufweisenden Verbindungsendabschnitt,
einer Kammer geringen Durchmessers, die mit der Bohrung koaxial verbunden ist und einen Durchmesser aufweist, der größer ist als der der Bohrung, und einer Kammer großen Durchmessers, die mit der Kammer geringen Durchmessers koaxial verbunden ist und einen Durchmesser aufweist, der größer ist als der Durchmesser der Kammer geringen Durchmessers. Die Kammer großen Durchmessers ist von einer ein paar diametral entgegengesetzte Fensteröffnungen aufweisenden Wand umgeben, die ein paar elastische Arme bildet, welche sich jeweils in eine der Fensteröffnungen von ihrer Kante entfernt von der Kammer geringen Durchmessers erstrecken, wobei jeder der Arme ein radial nach innen gebogenes, eine Klinke bildendes Ende aufweist. Die Kammer geringen Durchmessers enthält von einem Ring getrennte Dichtringe sowie eine Buchse, wobei diese Teile alle um ein mit dem Hauptkörper zu verbindenden Rohr befestigt sind. In der Kammer großen Durchmessers ist zusätzlich ein zylindrisches Halteelement aufgenommen, mit einem inneren Flächenbereich, der sich mit einem Wandabschnitt des Rohrs in Eingriff befindet, und einer Außenfläche mit einer Schulter, gegen die die Klinken angelegt sind, um das Rohr im Hauptkörper zu halten.

### DARSTELLUNG DER ERFINDUNG

Der Erfindung liegt die Aufgabe zugrunde, einen Endabschnitt einer Fluidleitung mit angeformter Steckarmatur der im Oberbedes Patentanspruchs 1 angegebenen Ausbildung bereitzustellen, bei dem die Verbindung zwischen der Fluidleitung und der Steckarmatur nicht dem hydraulischen Druck in der Fluidleitung ausgesetzt ist, der auch sehr hohen axialen Zug- und/ oder Druckkräften ohne Erzeugung unerwünschter Totvolumina widerstehen kann und bei dem die zur Abdichtung gegenüber dem komplementär ausgebildeten Gegenelement vorgesehene Dichtungsanordnung unverlierbar ist.

Die gestellte Aufgabe wird erfindungsgemäß durch die im Patentanspruch 1 angegebenen Merkmale gelöst. Vorteilhafte und/oder zweckmäßige Weiterbildungen sind in den Patentansprüchen 2 bis 13 angegeben und nachfolgend ebenfalls näher beschrieben.

Erfindungsgemäß ist bei einem Endabschnitt einer Fluidleitung aus Kunststoff mit einer durch Umspritzen koaxial angeformten Steckarmatur aus Kunststoff zur abgedichteten Steckverbindung mit einem komplementär ausgebildeten Gegenelement unter Zuhilfenahme eines Axialkräfte übertragenden Sicherungselements
an dem Endabschnitt eine erste Umfangsnut angeordnet, in deren Bereich die Steckarmatur unter formschlüssigem Eindringen des Kunststoffes der Steckarmatur in die erste Umfangsnut angeformt ist,
wobei der Endabschnitt in Fügerichtung der Steckarmatur über diese axial vorsteht und in dem über die Steckarmatur vorstehenden Bereich eine zweite Umfangsnut zur Aufnahme eines Dichtrings ausgebildet ist und
wobei eine dritte Umfangsnut zur Aufnahme des Sicherungselements außenumfangsseitig in die Steckarmatur eingeformt ist.

Durch die Anordnung der ersten Umfangsnut an dem Endabschnitt der Fluidleitung wird eine formschlüssige Verklammerung zwischen dem Endabschnitt und der Steckarmatur erzielt, die auch sehr großen axialen Krafteinwirkungen standhält. Die zweite Umfangsnut sichert einen darin eingelegten Dichtring zuverlässig gegen Verlust beim Transport des Endabschnitts bis zur Herstellung der Steckverbindung. Wenn die Steckverbindung mit einem komplementär ausgebildeten Gegenelement herbeigeführt ist, verhindert der Dichtring aufgrund seiner äußeren Anordnung, daß die Verbindung zwischen dem Endabschnitt der Fluidleitung und der Steckarmatur dem hydraulischen Druck im Betrieb der Fluidleitung ausgesetzt ist. Die dritte Umfangsnut in der Steckarmatur schließlich ermöglicht bei Druckbeaufschlagung der Steckverbindung eine (Reaktions)Krafteinleitung über das Sicherungselement in die Steckarmatur nahe dem Außendurchmesser der Fluidleitung, so daß die Verbindung zwischen dem Endabschnitt der Fluidleitung und der Steckarmatur überwiegend axial, d.h. auf Scherung beansprucht wird, ohne daß übermäßige Verformungen und damit einhergehende Totvolumina auftreten können.

Die erste Umfangsnut weist vorteilhaft in einer ersten Ausführungsform der Erfindung einen zylindrischen Nutgrund auf und ist beiderseits von ringförmigen Radialflächen begrenzt. Somit bildet die erste Umfangsnut mit ihren beiden ringförmigen Radialflächen sichere Widerlager für die Steckarmatur beim Auftreten von axialen Krafteinwirkungen.

Anstelle eines zylindrischen Nutgrunds kann die erste Umfangsnut auch einen Nutgrund aufweisen, der mit einer Profilierung versehen ist. Hierdurch wird - verglichen mit einer Umfangsnut, welche die gleiche Breite aber einen zylindrischen Nutgrund aufweist - auf einfache Weise die Verbundfläche zwischen der Fluidleitung und der Steckarmatur vergrößert, was der Festigkeit der Verbindung zwischen Steckarmatur und Fluidleitung förderlich ist.

Für die Verankerung der Steckarmatur in der ersten Umfangsnut ist es des weiteren von Vorteil, wenn die Breite der ersten Umfangsnut derart gewählt wird, daß sie gleich oder größer dem Außendurchmesser der Fluidleitung ist. Der sich in die erste Umfangsnut erstreckende Bereich der Steckarmatur besitzt dabei eine beträchtliche axiale Länge und ist daher auch sehr hohen in axialer Richtung einwirkenden Scherkräften gewachsen.

Bei einer zweiten Ausführungsform der Erfindung ist die erste Umfangsnut zwischen einer Widerlagerzone mit sich stetig verkleinerndem Außendurchmesser des Endabschnitts und einem davon axial beabstandeten, durch axiales Stauchen gebildeten ringförmigen Widerlagervorsprung des Endabschnitts gebildet. Diese Ausführungsform zeichnet sich dadurch aus, daß die erste Umfangsnut beidseitig durch gerundete Übergänge am Endabschnitt der Fluidleitung begrenzt ist, was die Kerbwirkung an diesen Stellen verringert, ohne daß die Widerlagerwirkung gegenüber axialen Krafteinwirkungen verlorengeht.

Bei der zweiten Ausführungsform der Erfindung ist es möglich, daß der Endabschnitt in Fügerichtung nach dem Widerlagervorsprung den durch die Widerlagerzone gebildeten kleinsten Durchmesser beibehält bis zu einer radialen Ringfläche am axial in Fügerichtung über die Steckarmatur vorstehenden Bereich des Endabschnitts, wobei die Steckarmatur mit einer ringförmigen Radialfläche endet und wobei die zweite Umfangsnut zwischen der radialen Ringfläche und der ringförmigen Radialfläche ausgebildet ist. Der Umstand, daß die Steckarmatur zur Bildung der zweiten Umfangsnut herangezogen wird, hat u.a. eine vorteilhafte Verlängerung der Steckarmatur und damit eine Vergrößerung der umspritzten Haftfläche zur Folge.

Es ist weiterhin von Vorteil, wenn die dritte Umfangsnut zur Aufnahme des Sicherungselements axial im Bereich der ersten Umfangsnut in die Steckarmatur eingeformt ist, wodurch zum einen die (Reaktions)Krafteinleitung über das Sicherungselement in die Steckarmatur in radialer Richtung gesehen besonders weit innen erfolgen kann, und zum anderen Kräfte vom Sicherungselement über die Steckarmatur in den Endabschnitt der Fluidleitung und umgekehrt sehr direkt weitergeleitet werden können. Hierbei kann die dritte Umfangsnut im Nutgrund beispielsweise einen Durchmesser aufweisen, der etwa dem Außendurchmesser entspricht, den die Fluidleitung in Fügerichtung der Steckarmatur gesehen vor der Steckarmatur aufweist.

Bei dem Sicherungselement handelt es sich vorzugsweise um eine kostengünstige Spangenfeder.

Ferner kann die Steckarmatur zwischen der zweiten Umfangsnut und der dritten Umfangsnut eine Aufweitungszone für das Sicherungselement haben, mit sich in Fügerichtung stetig verkleinerndem Außendurchmesser, über die das Sicherungselement während des Fügens der Steckverbindung bei moderatem Steckkraftbedarf aufgefedert werden kann. Ferner kann die Aufweitungszone beim Fügen der Steckverbindung der Zentrierung des Endabschnitts am Gegenelement dienen.

Im weiteren Verfolg des Erfindungsgedankens kann die Steckarmatur zwischen der zweiten Umfangsnut und der dritten Umfangsnut eine zylindrische Führungszone aufweisen, zur engen Führung des Endabschnitts in einem zugeordneten Kanal des Gegenelements. Diese Ausgestaltung der Steckarmatur bewirkt - verglichen zu einer Ausgestaltung der Steckarmatur ohne zylindrische Führungszone - eine Entlastung der Verbindung zwischen Steckarmatur und Fluidleitung, namentlich bei Biege- oder Biegewechselbeanspruchung des Endabschnitts.

Bei einer bevorzugten Werkstoffpaarung ist der Endabschnitt aus Polyamid 12 geformt, während die Steckarmatur aus Polyamid 6.6 mit einem Glasfaseranteil von 35 % gebildet ist. Zweckmäßig können die beiden verwendeten Polyamidwerkstoffe zur Verbesserung eines Stoffschlusses schließlich haftungsmodifiziert sein.

### KURZE BESCHREIBUNG DER ZEICHNUNGEN

Weitere Einzelheiten der Erfindung werden nachfolgend in drei Ausführungsbeispielen anhand der beigefügten Zeichnungen näher erläutert. Darin zeigt:
- Fig. 1: den abgebrochenen Längsschnitt durch den Endabschnitt mit angeformter Steckarmatur in einer ersten Ausführungsform,
- Fig. 2: die Steckverbindung des Endabschnitts gemäß Fig. 1 mit einem komplementär ausgebildeten Gegenelement im Längsschnitt,
- Fig. 3: die Querschnittsansicht entsprechend der Schnittverlaufslinie III-III in Fig. 2,
- Fig. 4: den abgebrochenen Längsschnitt durch den Endabschnitt mit angeformter Steckarmatur in einer zweiten Ausführungsform,
- Fig. 5: die Steckverbindung des Endabschnitts gemäß Fig. 4 mit einem komplementär ausgebildeten Gegenelement im Längsschnitt,
- Fig. 6: den abgebrochenen Längsschnitt durch den Endabschnitt mit angeformter Steckarmatur in einer dritten Ausführungsform und
- Fig. 7: die Steckverbindung des Endabschnitts gemäß Fig. 6 mit einem komplementär ausgebildeten Gegenelement im Längsschnitt.

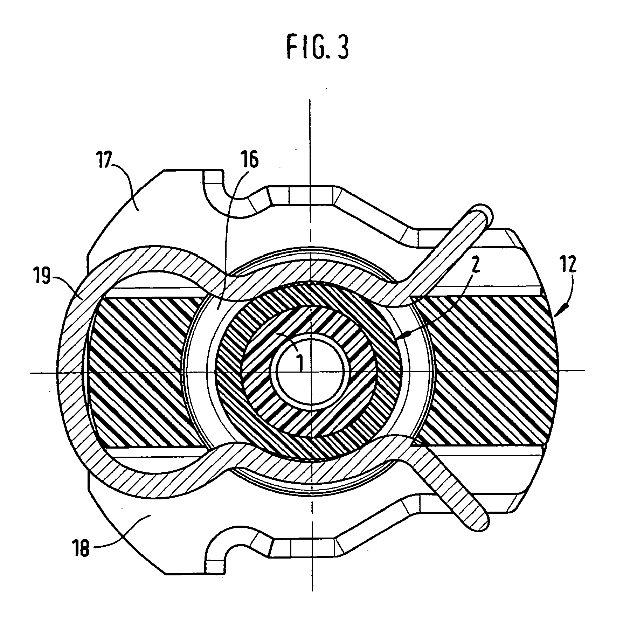

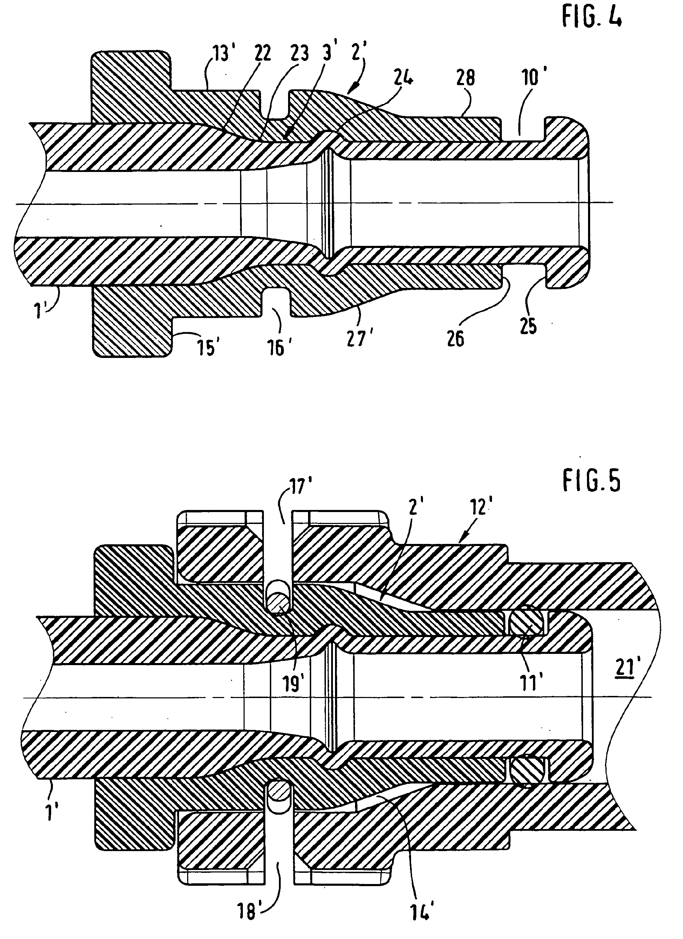

Der Anmeldungsgegenstand ist in den Zeichnungen gegenüber den tatsächlichen Größenverhältnissen vergrößert dargestellt. Die Querschnittsansicht gemäß Fig. 3 gilt gleichermaßen für die zweite und dritte Ausführungsform des Endabschnitts gemäß den Fig. 4 und 5 bzw. 6 und 7.

### DETAILLIERTE BESCHREIBUNG DER AUSFÜHRUNGSBEISPIELE

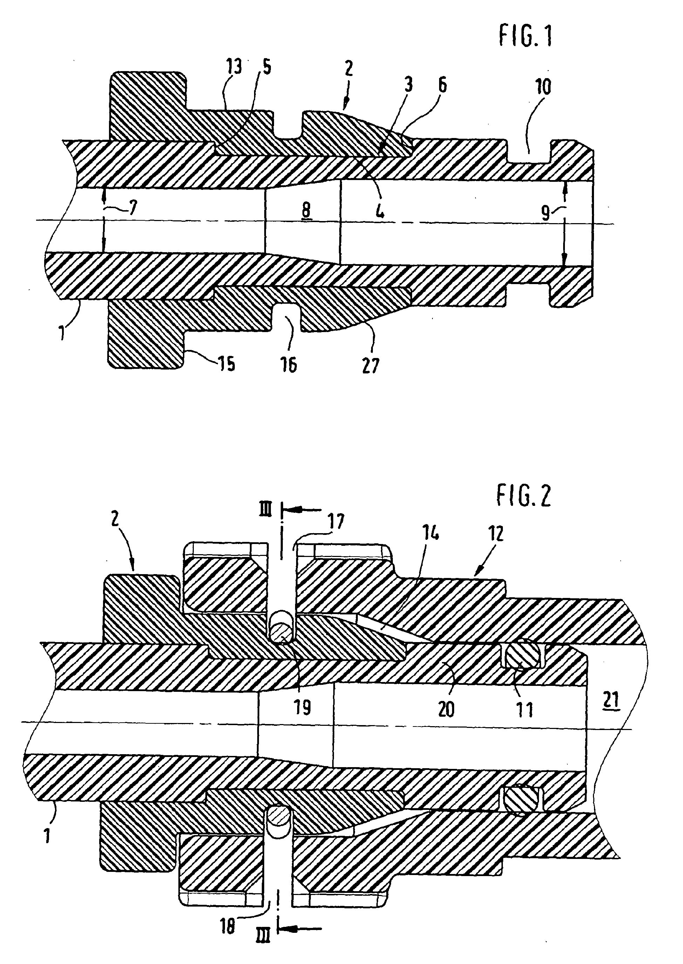

In den Fig. 1 und 2 ist der Endabschnitt einer Fluidleitung 1 dargestellt, die aus Kunststoff geformt ist, vorzugsweise aus Polyamid 12. Eine Steckarmatur 2 ist durch Umspritzen des Endabschnitts mit einem Kunststoff, vorzugsweise Polyamid 6.6 mit einem Glasfaseranteil von 35 %, an den Endabschnitt im vorliegenden Ausführungsbeispiel stoffschlüssig und, wie nachfolgend noch näher erläutert wird, auch formschlüssig koaxial angeformt. Die beiden Polyamidwerkstoffe können zur Verbesserung des Stoffschlusses in bekannter Weise haftungsmodifiziert sein.

An den Endabschnitt der Fluidleitung 1 ist eine erste Umfangsnut 3 angeordnet, in deren Bereich die Steckarmatur 2 unter formschlüssigem Eindringen des Kunststoffes der Steckarmatur 2 in die erste Umfangsnut 3 angeformt ist. Die erste Umfangsnut 3, die durch spanende Bearbeitung gebildet sein kann, weist einen zylindrischen mit der Längsachse des Endabschnitts koaxialen Nutgrund 4 auf und ist beiderseits von ringförmigen Radialflächen 5 bzw. 6 begrenzt. Die Radialflächen 5, 6 sind die Widerlager für eine axiale Festsetzung der Steckarmatur 2 auf dem Endabschnitt der Fluidleitung 1. Die Breite der ersten Umfangsnut 3 ist im gezeigten Beispiel größer als der Außendurchmesser der Fluidleitung 1, wodurch sich die erste Umfangsnut 3 über eine beträchtliche axiale Länge des Endabschnitts erstreckt.

Innerhalb des Endabschnitts und im axialen Bereich der ersten Umfangsnut 3 erweitert sich der Innendurchmesser 7 der Fluidleitung 1 mit einem kegelstumpfförmigen Übergang 8 zu dem Ausgangsdurchmesser 9 des Endabschnitts.

Der Endabschnitt der Fluidleitung 1 steht in Fügerichtung der Steckarmatur 2 über diese axial vor. In dem über die Steckarmatur 2 vorstehenden Bereich des Endabschnitts ist eine zweite Umfangsnut 10 ausgebildet, beispielsweise durch spanende Bearbeitung, Warmprägen od.dgl., die zur Aufnahme eines in Fig. 2 dargestellten und als 0-Ring ausgebildeten Dichtrings 11 vorgesehen ist.

In Fig. 2 ist die Steckverbindung des Endabschnitts gemäß Fig. 1 mit einem komplementär ausgebildeten Gegenelement 12 dargestellt. Das Gegenelement 12 übergreift dabei die Steckarmatur 2 teilweise, wobei der zylindrisch geformte mittlere Abschnitt 13 der Steckarmatur 2 in eine entsprechend geformte und dimensionierte Bohrung 14 des Gegenelements 12 aufgenommen ist. Der Einsteckweg des Endabschnitts wird durch eine an die Steckarmatur 2 angeformte Ringschulter 15 begrenzt, die beim Einstecken auf das Gegenelement 12 auftrifft.

In dieser Stellung von Endabschnitt und Gegenelement 12 fluchtet eine in die Steckarmatur 2 außenumfangsseitig eingeformte dritte Umfangsnut 16 mit entsprechenden Schlitzen 17 und 18 im Gegenelement 12, so daß eine die Steckverbindung gegen axiale Relativbewegungen zwischen Endabschnitt und Gegenelement 12 sichernde - in der Regel jedoch vormontierte - Spangenfeder 19 in die Schlitze 17, 18 und in die Umfangsnut 16 eingreifend eingesteckt werden kann. Wie in den Fig. 1 und 2 gut zu erkennen ist, ist die dritte Umfangsnut 16 zur Aufnahme der Spangenfeder 19 axial im Bereich der ersten Umfangsnut 3 in die Steckarmatur 2 eingeformt. Die dritte Umfangsnut 16 weist hierbei im Nutgrund einen Durchmesser auf, der etwa dem Außendurchmesser entspricht, den die Fluidleitung 1 in Fügerichtung der Steckarmatur 2 gesehen vor der Steckarmatur 2 aufweist.

Wie aus Fig. 2 ersichtlich ist, greift der Endabschnitt der Fluidleitung 1 mit seinem über die Steckarmatur 2 überstehenden zylindrischen Bereich 20 in den dazu passend dimensionierten hohlzylindrischen Kanal 21 des Gegenelements 12 ein. Der Dichtring 11 in der zweiten Umfangsnut 10 liegt dabei abdichtend der Wand des Kanals 21 an und dichtet einerseits die Steckverbindung, d.h. den Endabschnitt der Fluidleitung 1 gegenüber dem Gegenelement 12, ab und sorgt dabei dafür, daß andererseits der in der Fluidleitung 1 und dem Kanal 21 anstehende hydraulische Druck des Fluids nicht direkt auf die Verbindung zwischen der Steckarmatur 2 und dem Endabschnitt der Fluidleitung 1 einwirken kann, welche Verbindung mithin nicht hydraulisch dicht sein muß.

Angemerkt sei an dieser Stelle noch, daß in den Endabschnitt der Fluidleitung 1 innenumfangsseitig eine Stahlhülse (nicht gezeigt) eingepreßt sein kann, die sich in axialer Richtung bis zur Steckarmatur 2 und ggf. darüber hinaus erstreckt. Vermittels einer solchen Stahlhülse kann der Endabschnitt der Fluidleitung 1 insbesondere im Bereich der zweiten Umfangsnut 10 ausgesteift bzw. armiert werden, damit die im Verhältnis dünne Wandung des Endabschnitts der Fluidleitung 1 im Bereich des Nutgrunds der zweiten Umfangsnut 10 insbesondere bei hydraulischen Lastwechseln nicht einer übermäßig großen mechanischen Beanspruchung ausgesetzt ist.

Zur Beschreibung der zweiten Ausführungsform wird nunmehr auf die Fig. 4 und 5 Bezug genommen. Diese Ausführungsform unterscheidet sich von der zuvor beschriebenen ersten Ausführungsform im wesentlichen durch die andersartige Ausbildung der ersten Umfangsnut 3' und der zweiten Umfangsnut 10' an dem Endabschnitt der Fluidleitung 1'.

Die erste Umfangsnut 3' beginnt hierbei nicht an einer Radialfläche, sondern an einer Widerlagerzone 22, in der sich der Außendurchmesser des Endabschnitts der Fluidleitung 1' stetig bis auf den Durchmesser eines zylindrischen Abschnitts 23 verkleinert. Die Umfangsnut 3' endet an einem von der Widerlagerzone 22 axial beabstandeten, durch axiales Stauchen aus dem Endabschnitt gebildeten ringförmigen Widerlagervorsprung 24.

Der Endabschnitt der Fluidleitung 1' behält in Fügerichtung gesehen nach dem Widerlagervorsprung 24 den Durchmesser des zylindrischen Abschnitts 23, der als kleinster Durchmesser der Widerlagerzone 22 gebildet ist, bis zu einer radialen Ringfläche 25 am axial in Fügerichtung über die Steckarmatur 2' vorstehenden Bereich des Endabschnitts bei.

Die Steckarmatur 2' endet mit einer ringförmigen Radialfläche 26, die zusammen mit der gegenüberstehenden Ringfläche 25 und einem Teil des zylindrischen Abschnitts 23 die zweite Umfangsnut 10' begrenzt bzw. bildet.

Ein in die zweite Umfangsnut 10' eingelegter Dichtring 11' dichtet auch bei dieser zweiten Ausführungsform wie zuvor beschrieben sowohl die Steckverbindung an sich als auch die Verbindungsfläche zwischen dem Endabschnitt der Fluidleitung 1' und der Steckarmatur 2' gegenüber dem in der Fluidleitung anstehenden hydraulischen Druck ab. Auch bei der zweiten Ausführungsform sorgt eine Spangenfeder 19', die in der dritten Umfangsnut 16' der Steckarmatur 2' aufgenommen ist, für die Fixierung der Steckverbindung.

Der ersten und der zweiten Ausführungsform gemein ist schließlich noch (siehe die Fig. 1 und 4), daß die Steckarmatur 2, 2' zwischen der zweiten Umfangsnut 10, 10' und der dritten Umfangsnut 16, 16' eine Aufweitungszone 27, 27' aufweist, die einen sich in Fügerichtung stetig verkleinernden Außendurchmesser hat, d.h. in Fügerichtung im wesentlichen konisch zuläuft. Diese Aufweitungszone 27, 27' dient beim Fügen der Steckverbindung einerseits dazu, die vormontierte Spangenfeder 19, 19' elastisch aufzufedern bevor diese in der dritten Umfangsnut 16, 16' der Steckarmatur 2, 2' verrastet, andererseits dazu, den Endabschnitt der Fluidleitung 1, 1' am Gegenelement 12, 12' zu zentrieren. Während sich bei der ersten Ausführungsform gemäß den Fig. 1 und 2 an die Aufweitungszone 27 der Steckarmatur 2 in Richtung der zweiten Umfangsnut 10 der zylindrische Bereich 20 des Endabschnitts der Fluidleitung 1 anschließt, geht bei der zweiten Ausführungsform gemäß den Fig. 4 und 5 die Aufweitungszone 27' der Steckarmatur 2' in eine zylindrische Führungszone 28 der Steckarmatur 2' über, die an der Radialfläche 26 der zweiten Umfangsnut 10' endet und damit ebenfalls zwischen der zweiten Umfangsnut 10' und der dritten Umfangsnut 16' liegt. Wie hier die Fig. 5 veranschaulicht, dient die zylindrische Führungszone 28 der engen Führung der Steckarmatur 2' und damit mittelbar des Endabschnitts der Fluidleitung 1' in dem zugeordneten Kanal 21' im Gegenelement 12'.

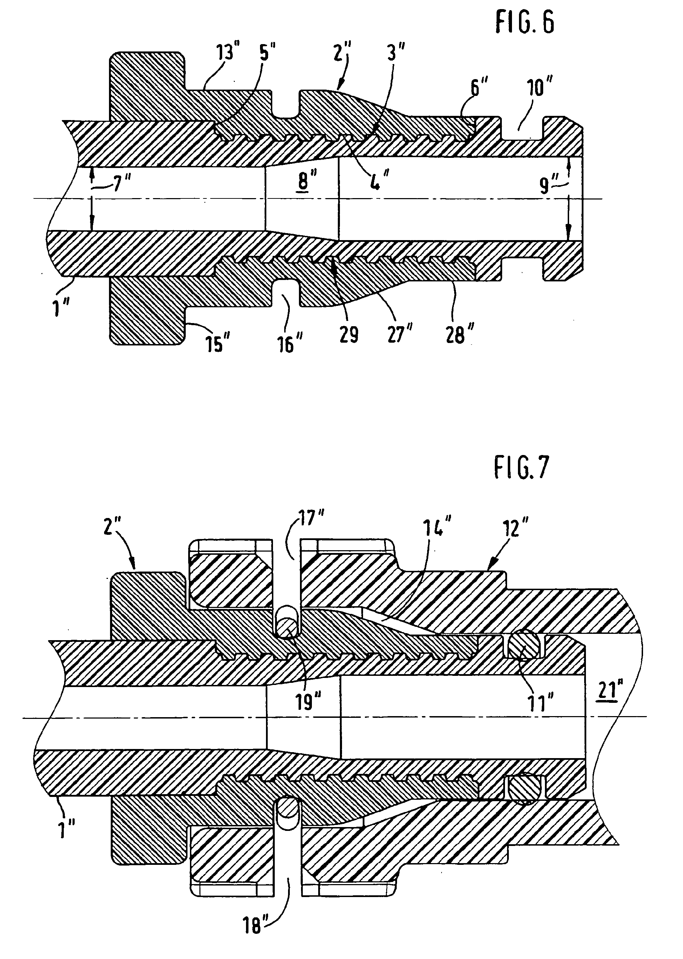

Die Fig. 6 und 7 veranschaulichen die dritte Ausführungsform, die abschließend nur insoweit beschrieben werden soll, als sie sich von der unter Bezugnahme auf die Fig. 1 bis 5 beschriebenen ersten bzw. zweiten Ausführungsform unterscheidet.

Bei der dritten Ausführungsform handelt es sich im Grunde um eine Abwandlung der ersten Ausführungsform. Wie ein Vergleich der Fig. 1 und 6 zeigt, erstreckt sich bei der dritten Ausführungsform die erste Umfangsnut 3'' in axialer Richtung über einen längeren Bereich, nämlich bis nahe an die zweite Umfangsnut 10''. Die Steckarmatur 2'' wurde entsprechend verlängert, und zwar derart, daß sich an die Aufweitungszone 27'' eine zylindrische Führungszone 28'' der Steckarmatur 2'' anschließt, die sich im Kanal 21'' des Gegenelements 12'' radial abstützen kann, analog der zweiten Ausführungsform. Für den Fachmann ist aus der den gefügten Zustand der Steckverbindung veranschaulichenden Fig. 7 ersichtlich, daß bei dieser Ausgestaltung von Steckarmatur 2'' und erster Umfangsnut 3'' sowohl die Verbindung zwischen dem Endabschnitt der Fluidleitung 1" und der Steckarmatur 2'' als auch der verhältnismäßig dünnwandige Querschnitt des Endabschnitts der Fluidleitung 1'' im Bereich des Nutgrunds 4'' nahe der Radialfläche 6'' gegenüber der ersten Ausführungsform deutlich entlastet sind wenn die Fluidleitung 1'' Biege- oder Biegewechselbeanspruchungen ausgesetzt ist.

Schließlich ist bei der dritten Ausführungsform gegenüber der ersten Ausführungsform der Nutgrund 4'' der ersten Umfangsnut 3'' anders ausgebildet, nämlich mit einer Profilierung 29 versehen, die im dargestellten Beispiel durch eine Mehrzahl von Umfangsrillen gebildet ist, aber auch durch andere Vertiefungen/Erhöhungen am Nutgrund 4'' gebildet sein kann, die eine Vergrößerung der Kontaktfläche zwischen der Fluidleitung 1" und der Steckarmatur 2'' bewirken. Eine solche Profilierung 29 kann durch spanende Bearbeitung, Warmprägen od.dgl. ausgebildet sein. Wenngleich in den Fig. 1 bis 5 nicht gezeigt, kann eine solche Profilierung auch an der ersten Umfangsnut 3, 3' der ersten bzw. zweiten Ausführungsform vorgesehen sein.

Es wird ein Endabschnitt einer Kunststoff-Fluidleitung mit einer durch Umspritzen koaxial angeformten Kunststoff-Steckarmatur zur abgedichteten Steckverbindung mit einem komplementär ausgebildeten Gegenelement unter Zuhilfenahme eines Axialkräfte übertragenden Sicherungselements offenbart. Der aus Endabschnitt und Steckarmatur gebildete Verbund zeichnet sich dadurch aus, daß (a) am Endabschnitt eine erste Umfangsnut angeordnet ist, in deren Bereich die Steckarmatur unter formschlüssigem Eindringen des Kunststoffes der Steckarmatur in die erste Umfangsnut angeformt ist, (b) der Endabschnitt in Fügerichtung der Steckarmatur über diese axial vorsteht und im über die Steckarmatur vorstehenden Bereich eine zweite Umfangsnut zur Aufnahme eines Dichtrings ausgebildet ist und (c) eine dritte Umfangsnut zur Aufnahme des Sicherungselements außenumfangsseitig in die Steckarmatur eingeformt ist. Ein solcher Verbund aus Endabschnitt und Steckarmatur ist kostengünstig herzustellen, vermag auch hohen Zug- und/oder Druckkräften ohne Erzeugung unerwünschter Totvolumina dicht zu widerstehen und sorgt auf einfache Weise für eine unverlierbare Aufnahme der die Steckverbindung abdichtenden Dichtung.

### BEZUGSZEICHENLISTE

- 1, 1', 1'': Fluidleitung
- 2, 2', 2'': Steckarmatur
- 3, 3', 3'': erste Umfangsnut
- 4, 4'': Nutgrund
- 5, 5'': Radialfläche
- 6, 6'': Radialfläche
- 7, 7'': Innendurchmesser
- 8, 8'': kegelstumpfförmiger Übergang
- 9, 9'': Ausgangsdurchmesser
- 10, 10', 10'': zweite Umfangsnut
- 11, 11', 11'': Dichtring
- 12, 12', 12'': Gegenelement
- 13, 13', 13'': mittlerer Abschnitt
- 14, 14', 14'': Bohrung
- 15, 15', 15": Ringschulter
- 16, 16', 16'': dritte Umfangsnut
- 17, 17', 17'': Schlitz
- 18, 18', 18'': Schlitz
- 19, 19', 19": Spangenfeder
- 20: zylindrischer Bereich
- 21, 21', 21'': Kanal
- 22: Widerlagerzone
- 23: zylindrischer Abschnitt
- 24: Widerlagervorsprung
- 25: Ringfläche
- 26: Radialfläche
- 27, 27', 27'': Aufweitungszone
- 28, 28'': Führungszone
- 29: Profilierung

## Patentansprüche

1. Endabschnitt einer Fluidleitung (1; 1'; 1") aus Kunststoff mit einer durch Umspritzen koaxial angeformten Steckarmatur (2; 2'; 2") aus Kunststoff zur abgedichteten Steckverbindung mit einem komplementär ausgebildeten Gegenelement (12; 12'; 12") unter Zuhilfenahme eines Axialkräfte übertragenden Sicherungselements (19; 19'; 19"), wobei
an dem Endabschnitt eine erste Umfangsnut (3; 3'; 3") angeordnet ist, in deren Bereich die Steckarmatur (2; 2'; 2 ") unter formschlüssigem Eindringen des Kunststoffes der Steckarmatur (2; 2'; 2 ") in die erste Umfangsnut (3; 3'; 3") angeformt ist, und
der Endabschnitt in Fügerichtung der Steckarmatur (2; 2'; 2'') über diese axial vorsteht
**dadurch gekennzeichnet, daß** in dem über die Steckarmatur (2; 2'; 2") vorstehenden Bereich eine zweite Umfangsnut (10; 10'; 10") zur Aufnahme eines Dichtrings (11; 11'; 11'') ausgebildet ist und
daß eine dritte Umfangsnut (16; 16'; 16") zur Aufnahme des Sicherungselements (19; 19'; 19 ") außenumfangsseitig in die Steckarmatur (2; 2'; 2") eingeformt ist.

2. Endabschnitt nach Anspruch 1, **dadurch gekennzeichnet, daß** die erste Umfangsnut (3) einen zylindrischen Nutgrund (4) aufweist und beiderseits von ringförmigen Radialflächen (5, 6) begrenzt ist.

3. Endabschnitt nach Anspruch 1, **dadurch gekennzeichnet, daß** die erste Umfangsnut (3") einen beiderseits von ringförmigen Radialflächen (5", 6") begrenzten Nutgrund (4") aufweist, der mit einer Profilierung (29) versehen ist.

4. Endabschnitt nach einem der vorhergehenden Ansprüche, **dadurch gekennzeichnet, daß** die Breite der ersten Umfangsnut (3; 3") gleich oder größer dem Außendurchmesser der Fluidleitung (1; 1") ist.

5. Endabschnitt nach Anspruch 1, **dadurch gekennzeichnet, daß** die erste Umfangsnut (3') zwischen einer Widerlagerzone (22) mit sich stetig verkleinerndem Außendurchmesser des Endabschnitts und einem davon axial beabstandeten durch axiales Stauchen gebildeten ringförmigen Widerlagervorsprung (24) des Endabschnitts gebildet ist.

6. Endabschnitt nach Anspruch 5, **dadurch gekennzeichnet, daß** der Endabschnitt in Fügerichtung nach dem Widerlagervorsprung (24) den durch die Widerlagerzone (22) gebildeten kleinsten Durchmesser beibehält bis zu einer radialen Ringfläche (25) am axial in Fügerichtung über die Steckarmatur (2') vorstehenden Bereich des Endabschnitts, wobei die Steckarmatur (2') mit einer ringförmigen Radialfläche (26) endet und wobei die zweite Umfangsnut (10') zwischen der radialen Ringfläche (25) und der ringförmigen Radialfläche (26) ausgebildet ist.

7. Endabschnitt nach einem der vorhergehenden Ansprüche, **dadurch gekennzeichnet, daß** die dritte Umfangsnut (16; 16'; 16") zur Aufnahme des Sicherungselements (19; 19'; 19") axial im Bereich der ersten Umfangsnut (3; 3'; 3") in die Steckarmatur (2; 2'; 2 ") eingeformt ist.

8. Endabschnitt nach Anspruch 7, **dadurch gekennzeichnet, daß** die dritte Umfangsnut (16; 16'; 16") im Nutgrund einen Durchmesser aufweist, der etwa dem Außendurchmesser entspricht, den die Fluidleitung (1; 1'; 1") in Fügerichtung der Steckarmatur (2; 2'; 2") gesehen vor der Steckarmatur (2; 2'; 2") aufweist.

9. Endabschnitt nach einem der vorhergehenden Ansprüche, **dadurch gekennzeichnet, daß** es sich bei dem Sicherungselement um eine Spangenfeder (19; 19'; 19") handelt.

10. Endabschnitt nach einem der vorhergehenden Ansprüche, **dadurch gekennzeichnet, daß** die Steckarmatur (2; 2'; 2") zwischen der zweiten Umfangsnut (10; 10'; 10") und der dritten Umfangsnut (16; 16'; 16") eine Aufweitungszone (27; 27'; 27") für das Sicherungselement (19; 19'; 19") hat, mit sich in Fügerichtung stetig verkleinerndem Außendurchmesser.

11. Endabschnitt nach einem der vorhergehenden Ansprüche, **dadurch gekennzeichnet, daß** die Steckarmatur (2'; 2") zwischen der zweiten Umfangsnut (10'; 10") und der dritten Umfangsnut (16'; 16") eine zylindrische Führungszone (28; 28") aufweist, zur engen Führung des Endabschnitts in einem zugeordneten Kanal (21'; 21") des Gegenelements (12'; 12").

12. Endabschnitt nach einem der vorhergehenden Ansprüche, **dadurch gekennzeichnet, daß** der Endabschnitt aus Polyamid 12 geformt ist, während die Steckarmatur (2; 2'; 2") aus Polyamid 6.6 mit einem Glasfaseranteil von 35 % gebildet ist.

13. Endabschnitt nach Anspruch 12, **dadurch gekennzeichnet, daß** die beiden Polyamide zur Verbesserung eines Stoffschlusses haftungsmodifiziert sind.

## Claims

1. End section of a plastic fluid line (1; 1'; 1") with a plastic push-in fitting (2; 2'; 2") which is molded on coaxially by injection molding for sealed push-in connection to a mating element (12; 12'; 12") of complementary shape with the aid of a securing element (19; 19'; 19") which transmits axial forces,
wherein arranged on the end section is a first circumferential groove (3; 3'; 3"), in the region of which the push-in fitting (2; 2'; 2") is molded on with form-fitting penetration of the plastic of the push-in fitting (2; 2'; 2") into the first circumferential groove (3; 3'; 3"), and
the end section, in the joining direction of the push-in fitting (2; 2'; 2"), protrudes beyond the latter in the axial direction,
**characterized in that**, in the region which protrudes beyond the push-in fitting (2; 2'; 2"), a second circumferential groove (10; 10'; 10") for receiving a sealing ring (11; 11' ; 11") is formed, and
**in that** a third circumferential groove (16; 16'; 16") for receiving the securing element (19; 19' ; 19") is formed into the push-in fitting (2; 2'; 2"*) on the outer circumference thereof.

2. End section according to Claim 1, **characterized in that** the first circumferential groove (3) has a cylindrical groove bottom (4) and is delimited on both sides by annular radial faces (5, 6).

3. End section according to Claim 1, **characterized in that** the first circumferential groove (3") has a groove bottom (4") which is delimited on both sides by annular radial faces (5" , 6") and is provided with a profiling (29).

4. End section according to any of the preceding claims, **characterized in that** the width of the first circumferential groove (3; 3") is greater than or equal to the outer diameter of the fluid line (1; 1'').

5. End section according to Claim 1, **characterized in that** the first circumferential groove (3') is formed between an abutment zone (22) with a steadily decreasing outer diameter of the end section and an annular abutment protrusion (24) of the end section which is formed at an axial distance therefrom by axial swaging.

6. End section according to Claim 5, **characterized in that** the end section, after the abutment protrusion (24) as seen in the joining direction, retains the smallest diameter defined by the abutment zone (22) up to a radial annular face (25) on the region of the end section which protrudes axially beyond the push-in fitting (2') in the joining direction, wherein the push-in fitting (2') ends with an annular radial face (26) and wherein the second circumferential groove (10') is formed between the radial annular face (25) and the annular radial face (26).

7. End section according to any of the preceding claims, **characterized in that** the third circumferential groove (16; 16'; 16") for receiving the securing element (19; 19'; 19") is formed into the push-in fitting (2; 2'; 2") axially in the region of the first circumferential groove (3; 3'; 3'').

8. End section according to Claim 7, **characterized in that** the third circumferential groove (16; 16'; 16") has in the groove bottom a diameter which corresponds approximately to the outer diameter of the fluid line (1; 1' ; 1") in front of the push-in fitting (2; 2'; 2") as seen in the joining direction of the push-in fitting (2; 2'; 2").

9. End section according to any of the preceding claims, **characterized in that** the securing element is a spring clip (19 ; 19' ; 19'') .

10. End section according to any of the preceding claims, **characterized in that**, between the second circumferential groove (10; 10'; 10") and the third circumferential groove (16; 16'; 16"), the push-in fitting (2; 2'; 2") has a widening zone (27; 27'; 27") for the securing element (19; 19'; 19"), said widening zone having an outer diameter which steadily decreases in the joining direction.

11. End section according to any of the preceding claims, **characterized in that**, between the second circumferential groove (10'; 10") and the third circumferential groove (16'; 16"), the push-in fitting (2'; 2") has a cylindrical guide zone (28; 28") for tightly guiding the end section in an associated channel (21'; 21") of the mating element (12'; 12").

12. End section according to any of the preceding claims, **characterized in that** the end section is formed from polyamide 12, while the push-in fitting (2; 2'; 2") is formed from polyamide 6.6 with a glass fiber content of 35%.

13. End section according to Claim 12, **characterized in that** the two polyamides are adhesion-modified in order to improve the binding of the materials.

## Revendications

1. Tronçon d'extrémité d'une conduite de fluide (1 ; 1' ; 1") en matière plastique comprenant un raccord enfichable (2 ; 2' ; 2") en matière plastique, qui y est formé coaxialement par moulage périphérique et est destiné à réaliser une liaison par emmanchement étanche avec un élément conjugué (12 ; 12' ; 12") de configuration complémentaire, à l'aide d'un élément d'arrêt (19 ; 19' ; 19") transmettant des forces axiales, tronçon d'extrémité au niveau duquel est agencée une première rainure périphérique (3 ; 3' ; 3") dans la zone de laquelle est formé par moulage le raccord enfichable (2 ; 2', 2") avec pénétration de la matière plastique du raccord enfichable (2 ; 2', 2") dans la première rainure périphérique (3 ; 3' ; 3"), par complémentarité de formes, le tronçon d'extrémité dépassant axialement au-delà du raccord enfichable (2 ; 2', 2") dans la direction d'assemblage de celui-ci,
**caractérisé en ce que** dans la zone dépassant du raccord enfichable (2 ; 2', 2"), est réalisée une deuxième rainure périphérique (10 ; 10' ; 10") destinée à recevoir un joint annulaire d'étanchéité (11; 11' ; 11"), et **en ce qu'**une troisième rainure périphérique (16 ; 16' ; 16") destinée à recevoir l'élément d'arrêt (19 ; 19' ; 19") est formée dans le raccord enfichable (2 ; 2', 2"), à la périphérie extérieure de celui-ci.

2. Tronçon d'extrémité selon la revendication 1, **caractérisé en ce que** la première rainure périphérique (3) présente un fond de rainure (4) cylindrique, et est délimitée des deux côtés par des surfaces radiales (5, 6) de forme annulaire.

3. Tronçon d'extrémité selon la revendication 1, **caractérisé en ce que** la première rainure périphérique (3'') présente un fond de rainure (4'') qui est délimité des deux côtés par des surfaces radiales (5", 6") de forme annulaire, et est pourvu d'un profilage (29).

4. Tronçon d'extrémité selon l'une des revendications précédentes, **caractérisé en ce que** la largeur de la première rainure périphérique (3 ; 3") est égale ou supérieure au diamètre extérieur de la conduite de fluide (1 ; 1") .

5. Tronçon d'extrémité selon la revendication 1, **caractérisé en ce que** la première rainure périphérique (3') est formée entre une zone de butée (22) avec un diamètre extérieur du tronçon d'extrémité diminuant de façon continue, et une protubérance de butée (24) du tronçon d'extrémité, qui est espacée axialement de la zone de butée, est de forme annulaire et est formée par refoulement axial.

6. Tronçon d'extrémité selon la revendication 5, **caractérisé en ce que** le tronçon d'extrémité conserve, après la protubérance de butée (24) dans la direction d'assemblage, le plus petit diamètre formé par la zone de butée (22), jusqu'à une surface annulaire radiale (25) dans la zone du tronçon d'extrémité, qui, dans la direction d'assemblage, dépasse axialement au-delà du raccord enfichable (2'), le raccord enfichable (2') se terminant avec une surface radiale (26) de forme annulaire, et la deuxième rainure périphérique (10') étant formée entre la surface radiale annulaire (25) et la surface radiale (26) de forme annulaire.

7. Tronçon d'extrémité selon l'une des revendications précédentes, **caractérisé en ce que** la troisième rainure périphérique (16 ; 16' ; 16") destinée à recevoir l'élément d'arrêt (19 ; 19' ; 19") est formée, axialement dans la zone de la première rainure périphérique (3 ; 3' ; 3"), dans le raccord enfichable (2 ; 2' , 2").

8. Tronçon d'extrémité selon la revendication 7, **caractérisé en ce que** la troisième rainure périphérique (16 ; 16' ; 16") présente dans le fond de rainure, un diamètre qui correspond environ au diamètre extérieur que présente la conduite de fluide (1 ; 1' ; 1") avant le raccord enfichable (2 ; 2', 2") en se référant à la direction d'assemblage du raccord enfichable (2 ; 2', 2).

9. Tronçon d'extrémité selon l'une des revendications précédentes, **caractérisé en ce que** l'élément d'arrêt est constitué par une agrafe élastique (19 ; 19' ; 19").

10. Tronçon d'extrémité selon l'une des revendications précédentes, **caractérisé en ce que** le raccord enfichable (2 ; 2', 2") possède, entre la deuxième rainure périphérique (10 ; 10' ; 10") et la troisième rainure périphérique (16 ; 16' ; 16"), une zone d'évasement (27 ; 27' ; 27") pour l'élément d'arrêt (19 ; 19' ; 19") avec un diamètre extérieur diminuant de manière continue dans la direction d'assemblage.

11. Tronçon d'extrémité selon l'une des revendications précédentes, **caractérisé en ce que** le raccord enfichable (2', 2") présente entre la deuxième rainure périphérique (10' ; 10") et la troisième rainure périphérique (16' ; 16") une zone de guidage (28 ; 28") cylindrique, pour le guidage étroit dans un canal associé (21' ; 21") de l'élément conjugué (12' ; 12").

12. Tronçon d'extrémité selon l'une des revendications précédentes, **caractérisé en ce que** le tronçon d'extrémité est moulé en polyamide 12, tandis que le raccord enfichable (2 ; 2', 2") est réalisé en polyamide 6.6 avec une part de fibres de verre de 35%.

13. Tronçon d'extrémité selon la revendication 12, **caractérisé en ce que** les deux polyamides, en vue d'améliorer une liaison par continuité de matière, sont modifiés quant à leur propriétés ou leur pouvoir d'adhérence.
